# EUROPEAN PATENT SPECIFICATION

(11) **EP 4 194 281 B1**
(45) Date of publication and mention of the grant of the patent: **19.03.2025**
(21) Application number: 22211878.8
(22) Date of filing: 07.12.2022
(51) Int. Cl.: B60R 21/13

(54) **WORK VEHICLE**
ARBEITSFAHRZEUG
VÉHICULE DE TRAVAIL

(30) Priority: 08.12.2021 JP 2021199443
(43) Date of publication of application: 14.06.2023
(73) Proprietor: Iseki & Co., Ltd., Matsuyama-shi, Ehime 799-2692 (JP)
(72) Inventor: KANA, Kuradomi, Tobe-cho, 791-2193 (JP); NARUTOSHI, Ishioka, Tobe-cho, 791-2193 (JP)
(74) Representative: TBK

(56) References cited:
- EP-A2- 3 470 583
- FR-A- 1 564 979
- GB-A- 996 000
- JP-A- S58 209 664
- US-A1- 2011 233 909
- US-A1- 2020 398 780

## Description

### BACKGROUND OF THE INVENTION

### 1. Field of the Invention

The present invention relates to a work vehicle such as an agricultural tractor.

### 2. Description of Related Art

A work vehicle such as an agricultural tractor having a front ROPS member is known (see, for example, JP 6 611 669 B).

In JP S58 - 209 664 A there is mention of a front attachment plate fixed to a (trans) -mission case of a tractor with bolts. This document is considered closest prior art.

Document FR 1 564 979 A (D2) also mentions mounting of a support frame at a transmission casing is mentioned. The support frame shall be easily demountable and serves to support a cabin consisting of easy-to-fit panels. When these panels are not mounted, the frame serves as protection for the driver i.e. as a ROPS member.

In the document, two alternatives for mounting at the sides or below the transmission case are shown.

According to EP 3 470 583 A2, a ROPS unit is arranged at (a rear side of) a transmission case. The problem described here is that the arrangement restricts working capabilities at a driving unit.

As a solution, according to this teaching, a ROPS frame is disposed at a front portion of the driving unit. The ROPS frame is mounted at the transmission case.

Document GB 996 000 A discloses another generic work vehicle.

### SUMMARY OF THE INVENTION

However, in the work vehicle such as the agricultural tractor in the related art as described above, attachment of the ROPS member is not always sufficiently firm.

The object of the invention is to provide a work vehicle on which a ROPS member can be more firmly attached in consideration of the above-described problem in the related art.

The object of the invention is achieved by a work vehicle according to claim 1. Advantageous embodiments are carried out according to the dependent claims.

According to the invention, a work vehicle includes: a front frame configured to support a front wheel; a transmission mechanism configured to transmit power; and a front ROPS member, the front ROPS member is fixed to a front ROPS left plate and a front ROPS right plate, and each of the front ROPS left plate and the front ROPS right plate is attached to the front frame and the transmission mechanism.

Accordingly, a simple attachment configuration of the ROPS member can be implemented.

According to the invention, a left spacer plate can be inserted between a front portion of the front ROPS left plate and the front frame, and a right spacer plate can be inserted between a front portion of the front ROPS right plate and the front frame.

Accordingly, since the left spacer plate is inserted and the right spacer plate is inserted, a flexible configuration can be implemented.

According to the invention, in the front ROPS member, a front ROPS left pillar member and a front ROPS right pillar member can be obtained by dividing a U-shaped pipe member in the vicinity of a center of the U shape.

Therefore, the front ROPS left pillar member and the front ROPS right pillar member are obtained by dividing the U-shaped pipe member in the vicinity of the center of the U shape, and thus an inexpensive configuration can be implemented.

According to the invention, the work vehicle further can include a rear ROPS member attached to a rear wheel axle housing and the transmission mechanism.

According to the invention, a first plate and a second plate can be fixed to the rear ROPS member, the first plate can be attached to the transmission mechanism, and the second plate can be attached to the rear wheel axle housing.

Accordingly, since the rear ROPS member can be attached to the rear wheel axle housing and the transmission mechanism, the rear ROPS member can be more firmly attached.

According to the invention, it is possible to provide a work vehicle on which a ROPS member can be more firmly attached.

### BRIEF DESCRIPTION OF THE DRAWINGS

FIG. 1 is a left side view of an agricultural tractor according to an embodiment of the invention;
FIG. 2 is a perspective view of the vicinity of a front ROPS member and the vicinity of a rear ROPS member of the agricultural tractor according to the embodiment of the invention;
FIG. 3A is a left side view of the vicinity of the front ROPS member of the agricultural tractor according to the embodiment of the invention, and FIG. 3B is a left side view of the vicinity of the rear ROPS member of the agricultural tractor according to the embodiment of the invention;
FIG. 4 is a front view illustrating a part of the front ROPS member and a part of the rear ROPS member of the agricultural tractor according to the embodiment of the invention;
FIG. 5 is a perspective view of the vicinity of the front ROPS member of the agricultural tractor according to the embodiment of the invention;
FIG. 6 is a plan view of the vicinity of the front ROPS member of the agricultural tractor according to the embodiment of the invention;
FIG. 7 is a front view illustrating a part of the front ROPS member of the agricultural tractor according to the embodiment of the invention;
FIG. 8 is a perspective view of the vicinity of the rear ROPS member of the agricultural tractor according to the embodiment of the invention;
FIG. 9 is a left side view (part 1) of the vicinity of the rear ROPS member of the agricultural tractor according to the embodiment of the invention; and
FIG. 10 is a left side view (part 2) of the vicinity of the rear ROPS member of the agricultural tractor according to the embodiment of the invention.

### DESCRIPTION OF EMBODIMENTS

An embodiment of the invention will be described in detail with reference to the drawings.

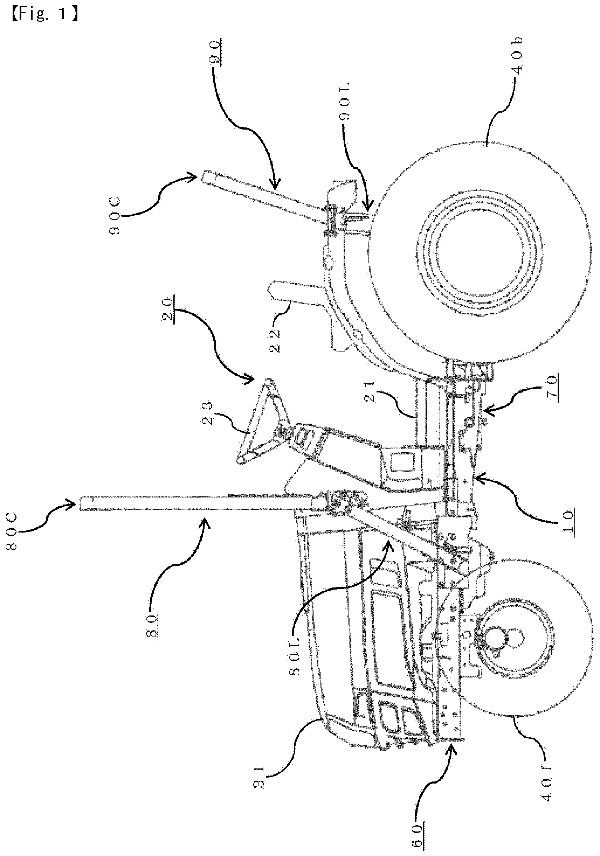

Some components may not be illustrated in the drawings or may be transparently illustrated or omitted, and the same applies hereinafter.
(1) First, a configuration and an operation of an agricultural tractor according to the embodiment of the invention will be described specifically with reference to FIGS. 1 to 4.

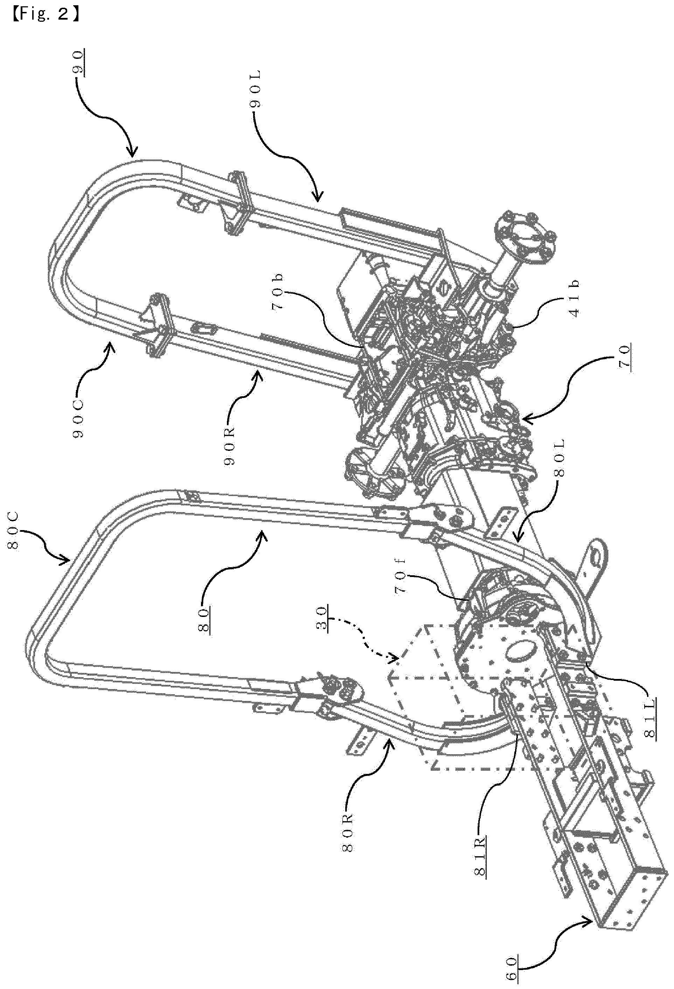

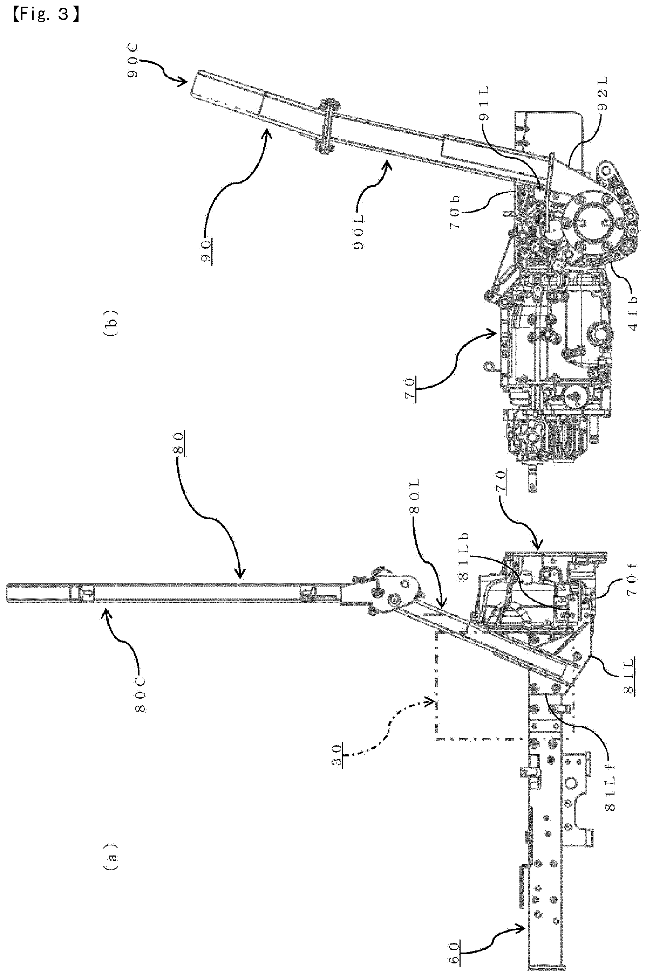

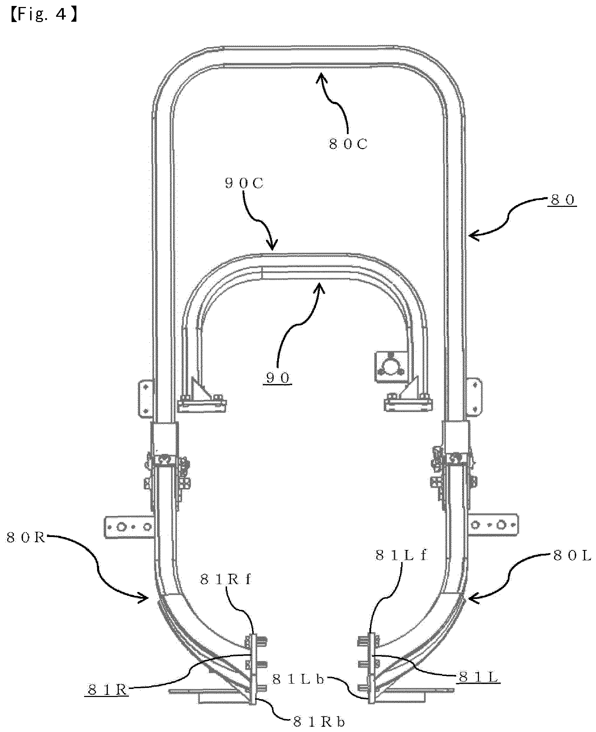

Here, FIG. 1 is a left side view of the agricultural tractor according to the embodiment of the invention, FIG. 2 is a perspective view of the vicinity of a front ROPS member 80 and the vicinity of a rear ROPS member 90 of the agricultural tractor according to the embodiment of the invention, FIG. 3A is a left side view of the vicinity of the front ROPS member 80 of the agricultural tractor according to the embodiment of the invention, FIG. 3B is a left side view of the vicinity of the rear ROPS member 90 of the agricultural tractor according to the embodiment of the invention, and FIG. 4 is a front view illustrating a part of the front ROPS member 80 and a part of the rear ROPS member 90 of the agricultural tractor according to the embodiment of the invention.

The agricultural tractor according to the present embodiment is an example of a work vehicle in the invention.

An engine 30 is provided inside a bonnet 31 at a front portion of a vehicle body 10.

Rotational power of the engine 30 is transmitted via various clutches inside a transmission case provided below a floor 21 of an operation unit 20. More specifically, the rotational power speed-changed by a main transmission and an auxiliary transmission is transmitted to a pair of left and right front wheels 40f and a pair of left and right rear wheels 40b.

A steering wheel 23 is provided behind the engine 30 together with a dashboard cover, a meter panel, and a forward-reverse lever.

A driver seat 22 is provided behind the steering wheel 23.

A brake pedal disconnection pedal and a clutch pedal are disposed on a left side of the floor 21. A pair of left and right pedals including a brake pedal and an accelerator pedal are disposed on a right side of the floor 21.

A work machine is mounted on a rear portion of the vehicle body 10 using, for example, a three-point link mechanism.

A front frame 60 attached to the engine 30 which generates power using fuel is a frame that supports the front wheels 40f.

For example, the front frame 60 includes a front side frame attached to the engine 30, and the front side frame supports a front wheel axle housing functioning as a front wheel axle case that incorporates an axle of the front wheels 40f and supports a front-portion load of the vehicle body 10.

The transmission mechanism 70 attached to the engine 30 is a mechanism that transmits the power generated by the engine 30 to the rear wheels 40b.

For example, the transmission mechanism 70 includes the transmission case attached to the engine 30. The transmission case incorporates a power transmission device that transmits the power of the engine 30 to driving wheels.

(2) Next, the configuration and the operation of the agricultural tractor according to the embodiment of the invention will be described more specifically mainly with reference to FIGS. 2 to 7.

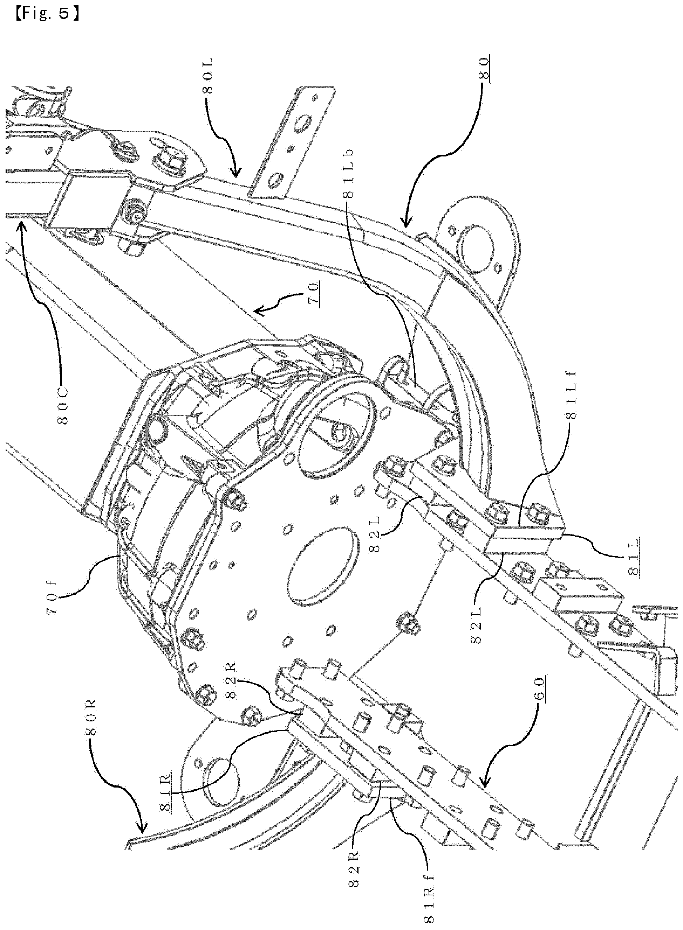

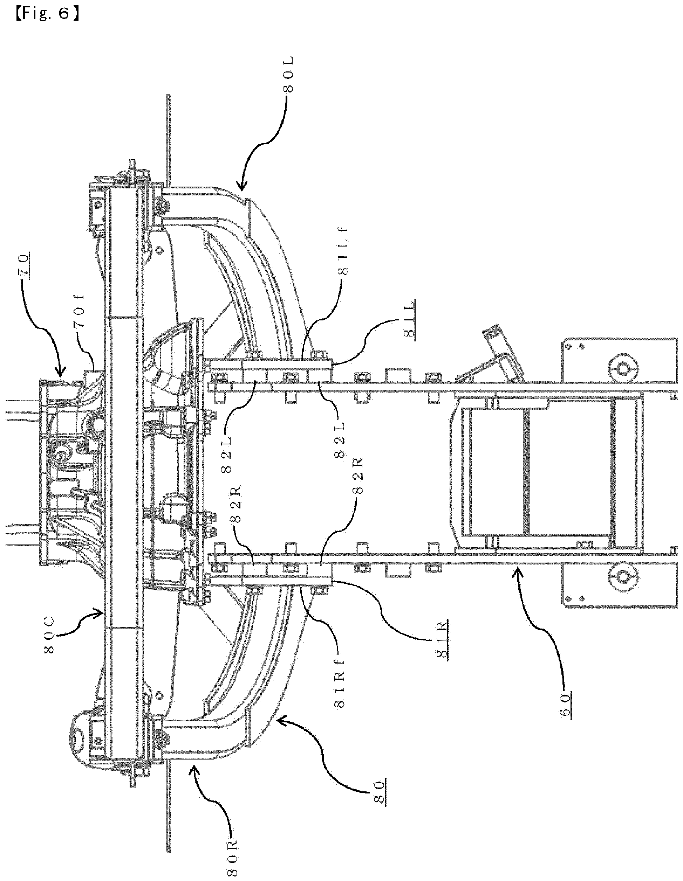

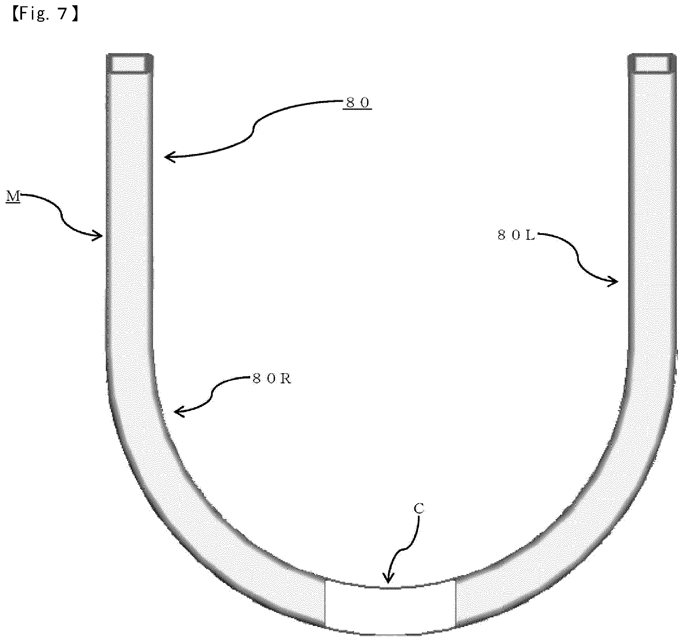

Here, FIG. 5 is a perspective view of the vicinity of the front ROPS member 80 of the agricultural tractor according to the embodiment of the invention, FIG. 6 is a plan view of the vicinity of the front ROPS member 80 of the agricultural tractor according to the embodiment of the invention, and FIG. 7 is a front view illustrating a part of the front ROPS member 80 of the agricultural tractor according to the embodiment of the invention.

The front ROPS member 80 is attached to the front frame 60 and a front portion 70f of the transmission mechanism 70.

For example, the front ROPS member 80 includes a front ROPS central arch member 80C which serves as an upper frame, and front ROPS left pillar member 80L and front ROPS right pillar member 80R which serve as lower frames, and the rear ROPS member 90 includes a rear ROPS central arch member 90C which serves as an upper frame and a rear ROPS left pillar member 90L and a rear ROPS right pillar member 90R which serve as lower frames.

The front ROPS member 80 in front of the driver seat 22 is erected between the front wheels 40f and the rear wheels 40b as a safety frame capable of securing a survival space to protect a driver in the driver seat 22 even when the vehicle body 10 overturns.

Of course, the rear ROPS member 90 whose ROPS base portion is attached to a rear wheel axle housing 41b functioning as a rear wheel axle case incorporating an axle of the rear wheels 40b for firmly supporting an entire load of the vehicle body 10 and which is erected behind the driver seat 22 is also effective as a safety frame, which is required to maintain a frame shape by preventing frame deformation even when the rear ROPS member 90 bears an entire weight of the vehicle body 10 due to overturning. However, when the agricultural tractor travels in a narrow space such as an orchard and a cultivation greenhouse, it is often desirable for the driver to perform a traveling operation while monitoring that the safety frame does not come into contact with trees in the orchard and a ceiling of the cultivation greenhouse, and thus a demand for the front ROPS member 80 erected in front of the driver seat 22 is not low.

The front ROPS member 80, which is attached not only to the front frame 60 but also to the front portion 70f of the transmission mechanism 70, has a firm vehicle body attachment and fixing configuration from the front frame 60 to the transmission mechanism 70, and thus, similarly to the rear ROPS member 90, a frame shape can be maintained by preventing frame deformation even when the front ROPS member 80 bears the entire weight of the vehicle body 10 due to the overturning.

The front ROPS member 80 includes the front ROPS left pillar member 80L and the front ROPS right pillar member 80R that are erected on a left side and a right side in a vehicle body left-right direction, respectively.

A front ROPS left plate 81L is fixed to a lower end of the front ROPS left pillar member 80L, a front portion 81Lf of the front ROPS left plate 81L is attached to the front frame 60, and a rear portion 81Lb of the front ROPS left plate 81L is attached to the front portion 70f of the transmission mechanism 70.

More specifically, fastening of three bolts in which a bolt shaft direction is the vehicle body left-right direction is used in attachment of the front portion 81Lf of the front ROPS left plate 81L, and fastening of four bolts in which a bolt shaft direction is the vehicle body left-right direction is used in attachment of the rear portion 81Lb of the front ROPS left plate 81L.

By using the front frame 60 that functions as a front wheel axle bracket and the front portion 70f of the transmission mechanism 70 that functions as a clutch housing, a configuration is adopted in which the front ROPS left plate 81L in the front ROPS left pillar member 80L of the front ROPS member 80 which is also referred to as a center ROPS, is attached at two positions, and thus strength is improved along with load distribution.

A front ROPS right plate 81R is fixed to a lower end of the front ROPS right pillar member 80R, a front portion 81Rf of the front ROPS right plate 81R is attached to the front frame 60, and a rear portion 81Rb of the front ROPS right plate 81R is attached to the front portion 70f of the transmission mechanism 70.

More specifically, fastening of three bolts in which a bolt shaft direction is the vehicle body left-right direction is used in attachment of the front portion 81Rf of the front ROPS right plate 81R, and fastening of four bolts in which a bolt shaft direction is the vehicle body left-right direction is used in attachment of the rear portion 81Rb of the front ROPS right plate 81R.

By using the front frame 60 that functions as the front wheel axle bracket and the front portion 70f of the transmission mechanism 70 that functions as the clutch housing, a configuration is adopted in which the front ROPS right plate 81R in the front ROPS right pillar member 80R of the front ROPS member 80 which is also referred to as the center ROPS, is attached at two positions, and thus the strength is improved along with the load distribution.

Left spacer plates 82L each having a thickness corresponding to a gap between the front portion 81Lf of the front ROPS left plate 81L and the front frame 60 are inserted.

By simply changing thicknesses of the two left spacer plates 82L between the front ROPS left plate 81L functioning as an attachment portion of the front ROPS member 80 which is also referred to as the center ROPS, and the front frame 60 functioning as the front wheel axle bracket, a flexible measure against a width of the front wheel axle bracket in the vehicle body left-right direction, which varies depending on a tractor model, is implemented, and thus sharing of the center ROPS is promoted. By attaching the front ROPS left plate 81L, the left spacer plates 82L, and the front frame 60 by bolt fastening without directly affecting the engine 30, generation of a large load on the engine 30 is prevented. Of course, the front ROPS left plate 81L may be attached, by bolting, to the left spacer plates 82L fixed to the front frame 60 by welding or the like.

Right spacer plates 82R each having a thickness corresponding to a gap between the front portion 81Rf of the front ROPS right plate 81R and the front frame 60 are inserted.

By simply changing thicknesses of the two right spacer plates 82R between the front ROPS right plate 81R functioning as an attachment portion of the front ROPS member 80 which is also referred to as the center ROPS, and the front frame 60 functioning as the front wheel axle bracket, a flexible measure against the width of the front wheel axle bracket in the vehicle body left-right direction, which varies depending on the tractor model, is implemented, and thus sharing of the center ROPS is promoted. By attaching the front ROPS right plate 81R, the right spacer plates 82R, and the front frame 60 by bolt fastening without directly affecting the engine 30, generation of a large load on the engine 30 is prevented. Of course, the front ROPS right plate 81R may be attached, by bolting, to the right spacer plates 82R fixed to the front frame 60 by welding or the like.

The front ROPS left pillar member 80L and the front ROPS right pillar member 80R are members obtained by dividing a U-shaped pipe member M in the vicinity of a center C of the U shape.

More specifically, the front ROPS left pillar member 80L and the front ROPS right pillar member 80R serving as the lower frames of the front ROPS member 80 are in a shape in which a U-shaped steel pipe bent at one position is divided into a left side and a right side. The bending of the lower frames is only performed once, and thus a processing cost and the like are reduced.

In this manner, since the front ROPS left pillar member 80L and the front ROPS right pillar member 80R that function as the lower frames of the center ROPS are collectively implemented by using the steel pipe with a large bending degree, an unnecessary portion of the pipe member M in the vicinity of the center C, which is a portion removed along with the division, is reduced.

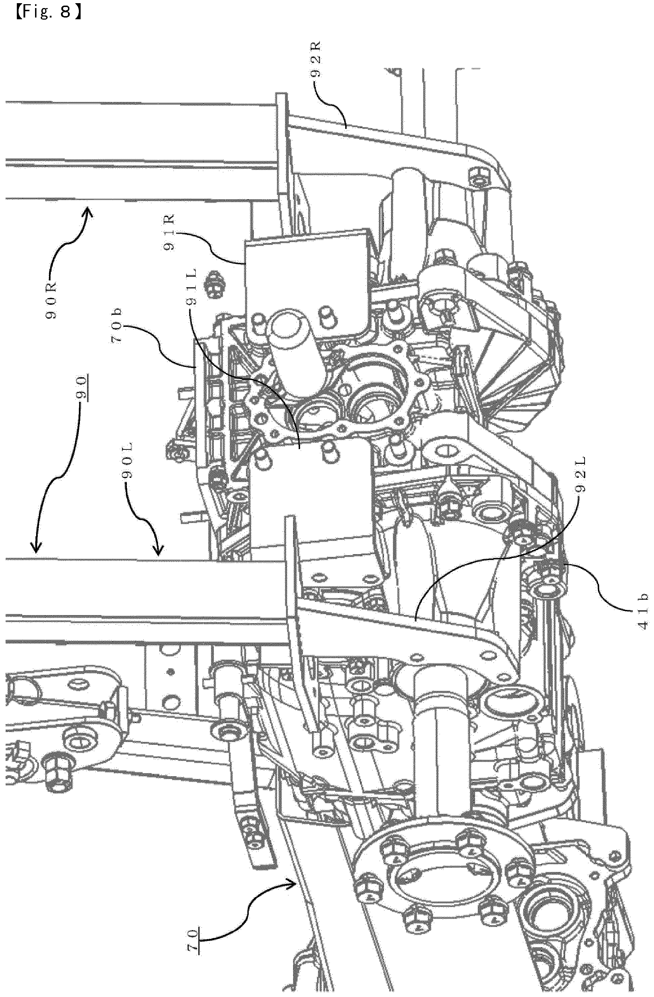

(3) Next, the configuration and the operation of the agricultural tractor according to the embodiment of the invention will be described further more specifically mainly with reference to FIGS. 8 to 10.

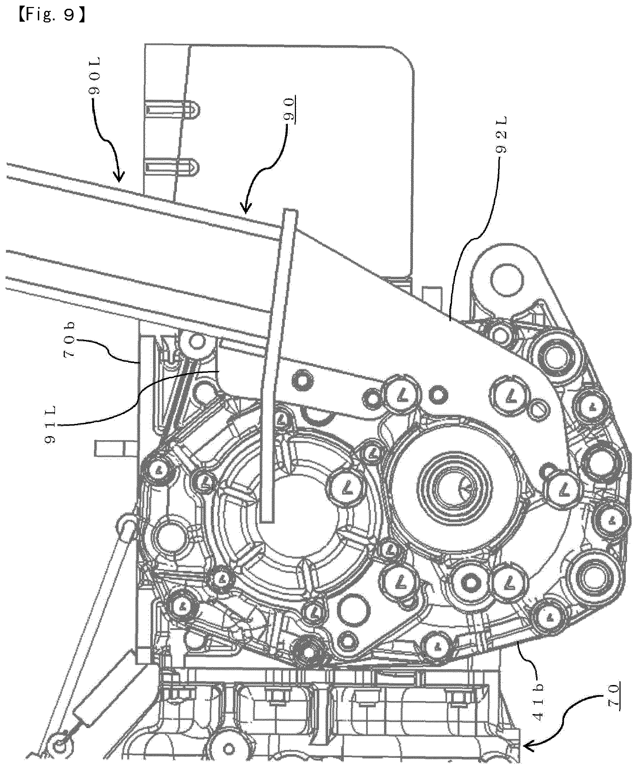

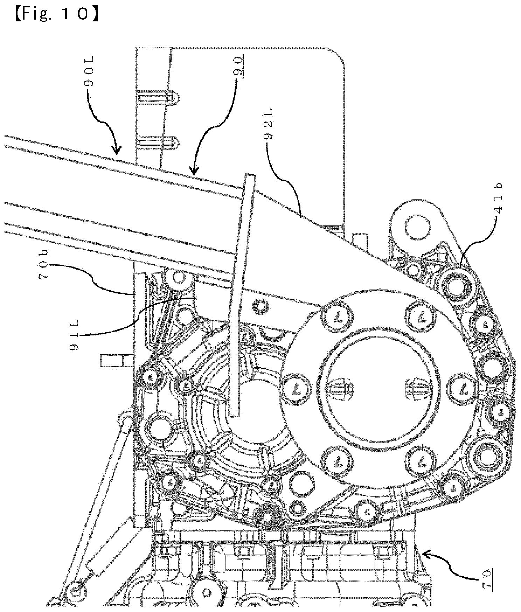

FIG. 8 is a perspective view of the vicinity of the rear ROPS member 90 of the agricultural tractor according to the embodiment of the invention, and FIGS. 9 and 10 are left side views (part 1 and part 2) of the vicinity of the rear ROPS member 90 of the agricultural tractor according to the embodiment of the invention.

The rear ROPS member 90 is attached to the rear wheel axle housing 41b and a rear portion 70b of the transmission mechanism 70.

The rear ROPS member 90 includes the rear ROPS left pillar member 90L and the rear ROPS right pillar member 90R that are erected on the left side and the right side in the vehicle body left-right direction, respectively.

A rear ROPS left L-shaped plate 91L and a rear ROPS left I-shaped plate 92L are fixed to a lower end of the rear ROPS left pillar member 90L, a left portion of the rear ROPS left L-shaped plate 91L and the rear ROPS left I-shaped plate 92L are attached to the rear wheel axle housing 41b, and a rear portion of the rear ROPS left L-shaped plate 91L is attached to the rear portion 70b of the transmission mechanism 70.

More specifically, fastening of two bolts in which a bolt shaft direction is the vehicle body left-right direction is used in attachment of the left portion of the rear ROPS left L-shaped plate 91L, fastening of two bolts in which a bolt shaft direction is a vehicle body front-rear direction is used in attachment of the rear portion of the rear ROPS left L-shaped plate 91L, and fastening of three bolts in which a bolt shaft direction is the vehicle body left-right direction is used in attachment of the rear ROPS left I-shaped plate 92L.

The rear ROPS left pillar member 90L functioning as the lower frame of the rear ROPS member 90 which is also referred to as a rear ROPS, is attached to the rear wheel axle housing 41b functioning as a rear axle housing at one position in the vicinity of a brake mechanism by using the rear ROPS left L-shaped plate 91L, and is not only attached to the rear portion 70b of the transmission mechanism 70 functioning as a rear transmission case at one position in the vicinity of an outer wall of the case, but also attached to the rear wheel axle housing 41b at one position in the vicinity of a wheel shaft through hole by using the rear ROPS left I-shaped plate 92L. In this manner, a configuration is adopted in which the rear ROPS left L-shaped plate 91L and the rear ROPS left I-shaped plate 92L are attached at three positions in total, and thus the strength is improved along with the load distribution.

A rear ROPS right L-shaped plate 91R and a rear ROPS right I-shaped plate 92R are fixed to a lower end of the rear ROPS right pillar member 90R, a right portion of the rear ROPS right L-shaped plate 91R and the rear ROPS right I-shaped plate 92R are attached to the rear wheel axle housing 41b, and a rear portion of the rear ROPS right L-shaped plate 91R is attached to the rear portion 70b of the transmission mechanism 70.

More specifically, fastening of two bolts in which a bolt shaft direction is the vehicle body left-right direction is used in attachment of the right portion of the rear ROPS right L-shaped plate 91R, fastening of two bolts in which a bolt shaft direction is the vehicle body front-rear direction is used in attachment of the rear portion of the rear ROPS right L-shaped plate 91R, and fastening of three bolts in which a bolt shaft direction is the vehicle body left-right direction is used in attachment of the rear ROPS right I-shaped plate 92R.

The rear ROPS right pillar member 90R functioning as the lower frame of the rear ROPS member 90 which is also referred to as the rear ROPS, is attached to the rear wheel axle housing 41b functioning as the rear axle housing at one position in the vicinity of the brake mechanism by using the rear ROPS right L-shaped plate 91R, and is not only attached to the rear portion 70b of the transmission mechanism 70 functioning as the rear transmission case at one position in the vicinity of the outer wall of the case, but also attached to the rear wheel axle housing 41b at one position in the vicinity of the wheel shaft through hole by using the rear ROPS right I-shaped plate 92R. In this manner, a configuration is adopted in which the rear ROPS right L-shaped plate 91R and the rear ROPS right I-shaped plate 92R are attached at three positions in total, and thus the strength is improved along with the load distribution.

### Industrial Applicability

The work vehicle in the invention can implement a firmer attachment of the front ROPS member and is useful as a work vehicle such as an agricultural tractor.

## Claims

1. A work vehicle comprising:
a front frame (60) configured to support a front wheel (40f);
a transmission mechanism (70) configured to transmit power; and
a front ROPS member (80), wherein
the front ROPS member (80) is fixed to a front ROPS left plate (81L) and a front ROPS right plate (81R), **characterised in that**
each of the front ROPS left plate (81L) and the front ROPS right plate (81R) is attached both to the transmission mechanism (70) and to the front frame (60).

2. The work vehicle according to claim 1, wherein
a left spacer plate (82L) is inserted between the front ROPS left plate (81L) and the front frame (60), and
a right spacer plate (82R) is inserted between the front ROPS right plate (81R) and the front frame (60).

3. The work vehicle according to claim 1 or 2, wherein
in the front ROPS member (80), a front ROPS left pillar member (80L) and a front ROPS right pillar member (80R) are obtained by dividing a U-shaped pipe member in the vicinity of a center of the U shape.

4. The work vehicle according to any one of claims 1 to 3, further comprising:
a rear ROPS member (90) attached to a rear wheel axle housing (41b) and the transmission mechanism (70).

5. The work vehicle according to claim 4, wherein
a first plate (91L, 91R) and a second plate (92L, 92R) are fixed to the rear ROPS member (90), the first plate (91L, 91R) is attached to the transmission mechanism (70), and the second plate (92L, 92R) is attached to the rear wheel axle housing (41b).

## Patentansprüche

1. Arbeitsfahrzeug mit:
einem Frontrahmen (60), der konfiguriert ist, ein Vorderrad (40f) zu halten;
einem Getriebemechanismus (70), der konfiguriert ist, Leistung zu übertragen; und
einem vorderen Überrollschutzelement (80), wobei das vordere Überrollschutzelement (80) an einer linken Front-Überrollschutzplatte (81L) und einer rechten Front-Überrollschutzplatte (81R) befestigt ist, **dadurch gekennzeichnet, dass**
sowohl die linke vordere Überrollschutzplatte (81L) als auch die rechte vordere Überrollschutzplatte (81R) sowohl am Getriebemechanismus (70) als auch am vorderen Rahmen (60) angebracht sind.

2. Arbeitsfahrzeug gemäß Anspruch 1, wobei
eine linke Distanzplatte (82L) zwischen der linken vorderen Überrollschutzplatte (81L) und dem vorderen Rahmen (60) eingefügt ist und
eine rechte Distanzplatte (82R) zwischen der rechten vorderen Überrollschutzplatte (81R) und dem vorderen Rahmen (60) eingefügt ist.

3. Arbeitsfahrzeug gemäß Anspruch 1 oder 2, wobei
im vorderen Überrollschutzelement (80) ein linkes vorderes Überrollschutzelement (80L) und ein rechtes vorderes Überrollschutzelement (80R) durch Teilen eines U-förmigen Rohrelements in der Nähe des Mittelpunkts der U-Form erhalten werden.

4. Arbeitsfahrzeug gemäß einem der Ansprüche 1 bis 3, ferner mit:
einem hinteren Überrollschutzelement (90), das an einem Hinterradachsengehäuse (41b) und dem Getriebemechanismus (70) angebracht ist.

5. Arbeitsfahrzeug gemäß Anspruch 4, wobei
eine erste Platte (91L, 91R) und eine zweite Platte (92L, 92R) an dem hinteren Überrollschutzelement (90) befestigt sind, die erste Platte (91L, 91R) an dem Getriebemechanismus (70) angebracht ist und die zweite Platte (92L, 92R) an dem Hinterradachsengehäuse (41b) angebracht ist.

## Revendications

1. Véhicule de travail comprenant :
un châssis avant (60) configuré pour supporter une roue avant (40f) ;
un mécanisme de transmission (70) configuré pour transmettre la puissance ; et
un élément ROPS avant (80), dans lequel
l'élément ROPS avant (80) est fixé à une plaque gauche ROPS avant (81L) et à une plaque droite ROPS avant (81R), **caractérisé en ce que**
chacune de la plaque gauche ROPS avant (81L) et de la plaque droite ROPS avant (81R) est fixée au mécanisme de transmission (70) et aussi au châssis avant (60).

2. Véhicule de travail selon la revendication 1, dans lequel
une plaque d'écartement gauche (82L) est insérée entre la plaque gauche ROPS avant (81L) et le châssis avant (60), et
une plaque d'écartement droite (82R) est insérée entre la plaque droite ROPS avant (81R) et le châssis avant (60).

3. Véhicule de travail selon la revendication 1 ou 2, dans lequel
dans l'élément ROPS avant (80), un élément de pilier gauche ROPS avant (80L) et un élément de pilier droit ROPS avant (80R) sont obtenus en divisant un élément de tuyau en forme de U à proximité d'un centre de la forme en U.

4. Véhicule de travail selon l'une des revendications 1 à 3, comprenant en outre :
un élément ROPS arrière (90) fixé à un carter d'essieu de roue arrière (41b) et au mécanisme de transmission (70).

5. Véhicule de travail selon la revendication 4, dans lequel
une première plaque (91L, 91R) et une deuxième plaque (92L, 92R) sont fixées à l'élément ROPS arrière (90), la première plaque (91L, 91R) est fixée au mécanisme de transmission (70), et la deuxième plaque (92L, 92R) est fixée au carter de l'essieu de roue arrière (41b).
